# EUROPEAN PATENT APPLICATION

(11) **EP 2 393 125 A2**
(43) Date of publication of application: **07.12.2011**
(21) Application number: 11003522.7
(22) Date of filing: 29.04.2011
(51) Int. Cl.: H01L 31/042

(54) **Superslim solar collector**

(30) Priority: 04.05.2010 IT LE20100005
(71) Applicant: COSTRUZIONI SOLARI S.R.L., 73020 Cavallino (LE) (IT)
(72) Inventor: The designation of the inventor has not yet been filed

(57) **Abstract**

Solar thermal collector, same dimensions as PV modules, including at least one support frame (11) act to endure the means for the absorption of solar energy (13), one layer of thermal insulating material (19) and double-glazing (12 and 12a). Thermal insulating layer (19) is made of a material containing at least one gelatinous substance of low thermal conductivity. Glasses (12 and 12a) are extraclear, with an anti-reflective coating that provides very high U-values, over 95%.

## Description

### FIELD OF APPLICATION

This invention refers to a solar collector apt to be used, predominantly but not exclusively, in solar thermal plants to convert solar energy in thermal energy.

### STATE OF THE ART

Technique includes solar collectors with one protection glass, a series of pipes where water flows, one or more collectors. It's renowned that thermal insulators, such as rock wool, polyurethane or polystyrene, are employed in order to thermally insulate solar collectors and avoid heat dispersions. In particolar, these thermal insulators are applied on the inner walls of the collector's frame, which is associated with the absorber or aperture area, apt to absorb solar energy.

A drawback of common solar collectors is that said thermal insulators require the use of high thickness layers to ensure a good insulation level.

These aspects concur then to increase the overall collectors thickness, which cannot be thinned under a given minimum value, requiring big spaces.

Known collectors using such types of insulators, because of their high thickness, typically about 10 cm or more, once installed have low aesthetical factor and bad architectonical integration. Moreover, they result in high environmental impact which may preclude their use in constrained areas.

One aim of the present invention is to make a solar collector of comparable size to the majority of photovoltaic panels, that is not bulky nor it has high environmental impact, thus allowing modularity and interchangeability with photovoltaic panels, while ensuring efficiency and high safety standards superior or fairly comparable to known panels.

Another purpose is to obtain a solar collector having high thermal efficiency and optimal aesthetic visual impact.

Another purpose is allow troubleless installation of adjacent photovoltaic and thermal panels. In order to overcome the drawbacks of the prior art and to obtain these and further purposes and advantages, the Applicant has designed, tested and built the present invention.

### INVENTION DISCLOSURE

This invention is explained and characterized in the independent claim.

The dependent claims explain other features of the present invention, or other variations on the main solution.

According to the purposes listed above, a solar panel realized on this finding is applied, not exclusively but predominantly, in thermal plants apt to convert solar energy in thermal energy. The present finding has associated a series of innovations aiming to ensure very high efficiency.

In today's state-of-the-art, we know that a high-efficiency solar panel must have a good thermal insulation (19) a great distance between the absorber and the glass cover (20) and a high-performance selective film, deposited on the absorber (13). These conditions imply the high solar panels' thickness, ranging between 8-12 cm. The goal of the following finding is to realize a solar panel having the same efficiency as the above mentioned solar panels though having notably reduced thickness measures.

The insulation layer is substituted by a thermal insulator made of a material composed, at least, of one substantially gelatinous matter, for example, but not only, silicon oxide based.

According to a variant of the present finding, the above mentioned material has the same consistence as felt and/or cotton wool, advantageously, but not only, in glass and/or carbon fiber.

In a realizative form, the above mentioned substance contains aerogel.

The employ of a thermal insulayion material containing, for example, aerogel, and having lower thermal conductivity than a common insulator, such as rock wool, polyurethane or polystyrene, as employed in the known technique, makes the overall thickness of the employed insulation material, on equal insulating capacity, be lower than the known technique's insulator thickness.

According to a variant of the present finding one layer of the above mentioned insulation material, at least, is disposed below the absorber, where the greatest thermal charge is concentrated.

The insulation material employed in the present finding can resist high temperatures without any particular damage, and thus it may be placed very close to the plate with no particular risks.

Thanks to the characteristics listed above, the solar panel thickness resulted from the present finding, determines greatly reduced overall dimensions if compared with those of a known solar panel type. A prerogative of the solar panel by the present finding is, therefore, to give the possibility of architectonic integration in buildings' vertical walls and among sloped roofs tiles, or to be inserted in balcony parapet, determining small environmental impact.

Moreover, the solar panel thickness according to the present finding is so reduced as to be comparable with common photovoltaic panels' thickness. What enables, thence, to install a plurality of panels by the present finding, perfectly aligned with photovoltaic panels, consequently obtaining such plants that integrate both the thermal and photovoltaic solutions, though standing structurally harmonious and respectful of environmental constraints.

This insulation material, moreover, offers the advantage of easy storage and transports by coils and not by sheets, as per the insulators employed in the known technique. What allows, during the panel's production phase, to transport a bigger quantity of material and to semplify the storage operations, consequently reducing the costs. The necessary diminution of the distance between glass and absorber provokes a consequent efficiency loss. In the following finding, that reduction is recovered by the adoption of double glazing, necessary to reduce the heat losses. The transmittance fall due to double glazing is then recovered by the high glasses transmittance, in fact they are employed in their extraclear variant and endowed with an antireflective film ensuring very high transmittance factors, over 95%.

According to one of the present finding's variant, the means to absorb solar energy are coated with titanium oxide, chrome nitride or varnish, to increase the panel's capacity and thermal efficiency.

According to another variant of the present finding, the absorbing means include a plate solded with one or more associated pipes for the heat-transfer fluid, apt to keep the absorber in a linear, flat position.

### SCHEMA ILLUSTRATION

These and other characteristics of the present finding are clearly shown in the following description of a preferential realizative form, given as a not restrictive example, with reference to the schema annexes, where:
fig. 1 is the top view of a solar panel by the present finding;
fig. 2 is a section view following the II-II line of a detail in fig. 1;
fig. 3 is a section view following the III-III line of a detail in fig. 1.

### DESCRIPTION OF A PREFERENTIAL REALIZATIVE FORM

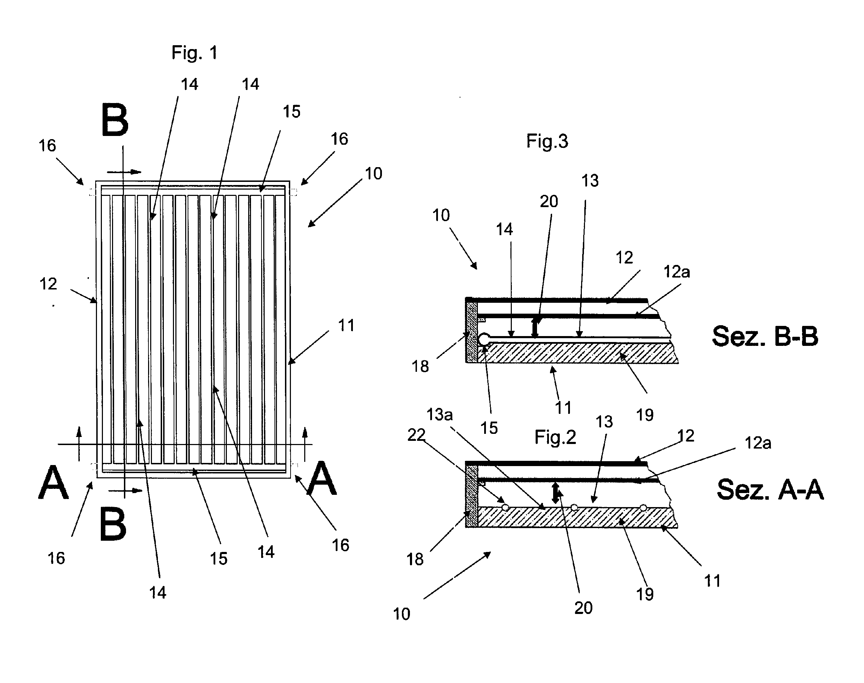

With reference to fig. 1, a solar panel 10 according to the present finding is profitably employed in a solar thermal plant to convert solar energy in thermal energy.

The solar panel 10 includes a containment folded plate 11, in metal material, a plate for example, substantially parallelepiped-shaped, open on one side where two cover slabs 12 and 12a, advantageously of glass or plexiglass®, are correspondently associated. The cover slabs 12 and 12a allow the solar radiation passage and limit heat dispersion.

The solar panel 10 also includes, below the cover slabs 12 and 12a, and substantially within the folded plate 11, an absorbing plate 13, apt to absorb the solar energy. The absorber 13 is advantageously realized in a conductive metal material, copper for example, and is coated with a layer of titanium oxide or chrome nitride or glazes, corresponding in the specific case to the upper surface 13a which is exposed to solar radiations, to increase its absorbing capacity and thermal efficiency.

Below the absorber 13, a plurality of copper pipes 14 are associated, for example by welding, in which a heat-transfer fluid is apt to flow. The pipes 14 are associated to the absorber 13 in correspondence with the partial concavities 21 on the absorber 13 itself. In the specific case the solar panel 10 is endowed with a plurality of pipes 14 monospaced and parallel disposed along a substantially longitudinal direction of the solar panel 10 and two transversal pipes 15 substantially disposed in correspondence of the smaller sides of the solar panel 10, connected with the above mentioned pipes 14 longitudinally and transversally disposed. The longitudinal pipes 14, in correspondence of the transversal pipes 15 around, present a direct portion. The pipes 15 are endowed on their ends with screw bushings 16 for the insertion of fasteners, of the nipple type for example, apt to connect adjacent panels 10, in order to set panels 10 in batteries and increase the thermal capacity of the solar plant, and/or more pipes conveying the heat-transfer fluid, for example towards heat accumulators devices. Longitudinal and transversal pipes 14,15 also have the function of structurally stiffening the absorber 13, while keeping it in a linear and flat position. The transversal pipes 15, furthermore, keep the several layers composing the solar panel 10 associated, in the specific case, the absorber 13 and the containment structure 11.

The panel 10 is also internally coated by layers 18, 19 of thermal insulation material to avoid the absorbed heat dispersion.

Specifically, the solar panel 10 is internally coated along its side walls of insulation layers 18 of rockwool, polyurethane or polystyrene or aerogel.

Solar panel 10 also includes one or more insulation material layers 19 associated to the bottom of the containment folded plate 11 (figures 2 and 3). Such insulating layers 19 are made of a material having the felt and/or cotton wool shape and consistance, advantageously, in glass and/or carbon fibre, or other analogue or fungible material, and containing a low thermal conductive substance, such as aerogel advantageously.

Aerogel is substantially a gel where the liquid component that a gel normally contains is substituted by a gaseous component, and it is an optimal thermal insulator.

In fact, at 100°C it presents a thermal conductivity of about 0,014 W/m·K, while a common insulator like rockwool at 100°C has a thermal conductivity of 0,040 W/m.K. The low thermal conductivity, and consequently the greater aerogel insulation capacity, thence allows the employment of insulation material layers 19 having a smaller thickness than the common thermal insulators employed in the known technique. Furthermore, the solar thermal panel 10 according to the present finding has an overall thickness considerably reduced than the known panel's one. Panels by the present finding can reach an overall thickness between 40 mm and 45 mm, advantageously about 42 mm.

In one preferential shape of production, the number of layers 19 of aerogel is two and the thickness of any of the above mentioned layers is between 4 mm and 6 mm about, advantageously 5 mm.

It is a part of the present finding to predict that solar thermal panel 10 is constituted by double glasses 12 and 12a of extra-clear and antireflective type apt to reduce heat losses. It is clear that, to the solar thermal panel described so far, changes may be attributed and/or parts may be added, not leaving the present finding by that.

It is a part of the present finding to predict that solar thermal panel 10 is covered inside, too, along its lateral sides by layers 19 of aerogel or similar or fungible materials, length between 160 cm and 165 cm, advantageously 164 cm, and width between 92 cm and 99 cm, advantageously 94 cm.

It is clear that, even if the present finding has been described with reference to some specific examples, an expert actor of that sector might make solar thermal panels in many other equivalent shapes, with the same characteristics expresses in the claims and so all of them included in the protection they have defined.

## Claims

1. Solar thermal collector, whose dimensions are the same as PV modules, including at least one support frame (11) act to endure the means for the absorption of solar energy (13), one layer of thermal insulation material (19) containing at least one gelatinous substance of low thermal conductivity, and double-glazing (12 and 12a).

2. Solar collector as in claim 1, **characterized in that** said material has felt and/or cotton consistency.

3. Solar collector as in claim 1, **characterized in that** said gelatinous substance contains a gaseous component instead of a liquid one.

4. Solar collector as in claim 3, **characterized in that** said substance is aerogel.

5. Solar collector as in claim 1, **characterized in that** the thermal insulation layer (19) has a thickness ranging between about 4 mm and 12 mm, advantageously 5 mm.

6. Solar collector as in any claim hereinbefore, **characterized in that** the thermal insulation layer (19) is set inside the support frame (11) and below the solar energy absorbers (13).

7. Solar collector as in any claim hereinbefore, **characterized in that** its overall thickness is about 30-70 mm, advantageously about 50mm.

8. Solar collector as in claim 1, **characterized in that** said means to absorb solar energy (13) are coated with titanium oxide and / or chrome nitride and / or paints in correspondence with the surface (13a) exposed to solar radiations.

9. Solar collector as in claim 1, **characterized in that** said means to absorb solar energy comprise a plate (13).

10. Collector as in claim 1, **characterized in that** it has a thermal conductivity at 100 ° C, of about 0.014 W/mK.

11. Collector as in claim 1, **characterized in that** it has at least two extra-clear glasses, whose distance is 3-10 mm, advantageously 8 mm.

12. Collector as in claim 1, **characterized in that** the distance between the bottom glass (12a) and the absorbing plate (13) is 8-12 mm, advantageously 10 mm.

13. Collector as in claim 1, **characterized in that** the double-glazing (12, 12a) transmittance is higher than 95% by the deposition of an anti-reflective layer.

14. Collector as in claim 1, **characterized in that** it is modular with most photovoltaic panels.
